# EUROPEAN PATENT SPECIFICATION

(11) **EP 1 796 513 B1**
(45) Date of publication and mention of the grant of the patent: **04.08.2021**
(21) Application number: 05789301.8
(22) Date of filing: 30.09.2005
(51) Int. Cl.: A47C 7/02, A47C 7/18, B60N 2/70

(54) **A SEAT PORTION FOR A SEAT**
SITZTEIL FÜR EINEN SITZ
PARTIE DE SIEGE POUR SIEGE

(30) Priority: 08.10.2004 GB 0422449
(43) Date of publication of application: 20.06.2007
(73) Proprietor: The Way to Win Limited, Brentwood, Essex CM15 8AP (GB)
(72) Inventor: MARSHALL, Neal, Solihull, West Midlands B91 1JX (GB); MOULE, Terry Glyn, deceased (GB)
(74) Representative: Jones, Graham Henry
(86) International application number: PCT/GB2005/003778
(87) International publication number: WO 2006/037970

(56) References cited:
- WO-A-2004/082555
- DE-A1- 2 837 630
- DE-U1- 20 316 384
- FR-E- 96 403
- JP-U- S63 163 654
- US-A- 2 237 475
- US-A- 2 659 418
- US-A- 2 750 996
- US-A- 2 822 554
- US-A- 3 158 878
- US-A- 3 606 463
- US-A- 4 879 776
- US-B2- 6 687 933

## Description

This invention relates to a seat portion for a seat. This invention also relates to a seat comprising the seat portion and a backrest portion.

Seats are often uncomfortable for persons sitting on them, and the seats tend to become more uncomfortable with the passage of time. When seats become uncomfortable, it is usually a seat portion of the seat that first becomes uncomfortable. Where seats are occupied for long periods of time, for example by passengers travelling by air, sea or road, then journeys may be spoilt by uncomfortable seats. Uncomfortable seats may also lead to medical problems such for example as lower back pain and deep vein thrombosis.

It is an aim of the present invention to reduce the above mentioned problem.

Accordingly, the present invention provides a seat portion for a seat, which seat portion is characterised by the combination of:
(i) the seat portion is made of a single foam material having a plurality of apertures defining a seating area;
(ii) the seating area is such that it comprises a first portion which has the apertures and which is for receiving a person's buttocks, a second portion which has the apertures and which is for receiving a rear thigh part of a first leg of the person, and a third portion which has the apertures and which is for receiving a rear thigh part of a second leg of the person, the third portion being spaced apart from the second portion;
(iii) the seating area is softer than the remainder of the seat portion;
(iv) each aperture has an open end which forms part of an outer surface of the seat portion;
(v) the apertures are cylindrical blind bores;
(vi) the apertures in the second and third portions extend forwards and sideways over the seating area; and
(vii) the remainder of the seat portion that extends completely between the second and third portions does not contain any apertures.

The seating area in the seat portion is comfortable to sit on because it feels softer than the remainder of the seat portion. The remainder of the seat portion is however present for providing support for the softer seating area.

With the second and third portions of the seating area being spaced apart, the person is encouraged to sit with their legs spaced slightly apart and in a good sitting position. The apertures give lower local spring compression rates in strategically located positions. The seat portion of the present invention may aid the functions of the nervous system and also reduce pressure on the vascular system. Thus, the seat portion is able to aid venous return as opposed to normal seats which often do not do this. The effect of increased nerve supply and decreased pressure on the venous return enables the person to sit more comfortably and for longer periods of time. In addition, the person has a drastically reduced possibility of pressure induced circulatory and nerve supply problems. The use of the single foam material removes tolerance variations of foams that are inherently present in seat portions made of more than one foam, for example where there are high and low density foams.

According to the invention the bores are cylindrical blind bores, preferably of circular cross-section.

The present invention also provides a seat comprising the seat portion and a backrest portion.

The seat is preferably one in which the backrest portion is made of a single foam material having one or more apertures defining a backrest area, the backrest area being such that it comprises a first portion for receiving a spine part of the person's back, and a second portion for receiving a shoulder part of the person's back.

Usually, the seat will be one in which the backrest portion has the same type of apertures as the seat portion. If desired however the backrest portion may have a different type of apertures to the seat portion. Thus, for example, different types of apertures in the seat portion and the backrest portion may be employed. Also, for example, the seat apertures may be covered whilst the backrest aperture or apertures may be open, or vice versa as may be desired.

The single foam material may be any suitable and appropriate foam material. Thus, for example, the single foam material may be polyurethane. The single foam material may be treated with a fire retardant material.

An embodiment of the invention will now be described solely by way of example and with reference to the accompanying drawings in which:
Figure 1 is a perspective view of a first seat and which is according to the present invention;
Figure 2 is a schematic view of the seat shown in Figure 1;
Figure 3 is a section on the line A - A shown in Figure 1;
Figure 4 is a sectional view on the line B - B shown in Figure 3;
Figure 5 is a schematic perspective view of a second seat and which is not according to the present invention;
Figure 6 is a section on the line A - A shown in Figure 5;
Figure 7 is a section on the line B - B shown in Figure 6;
Figure 8 is a section on the line C - C shown in Figure 6; and
Figure 9 is a perspective view of the seat as shown in Figure 5.

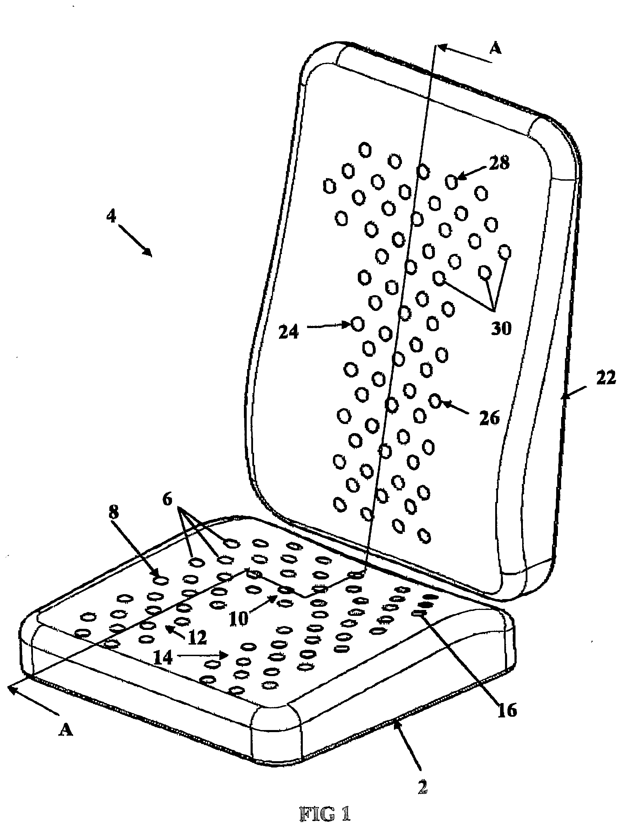

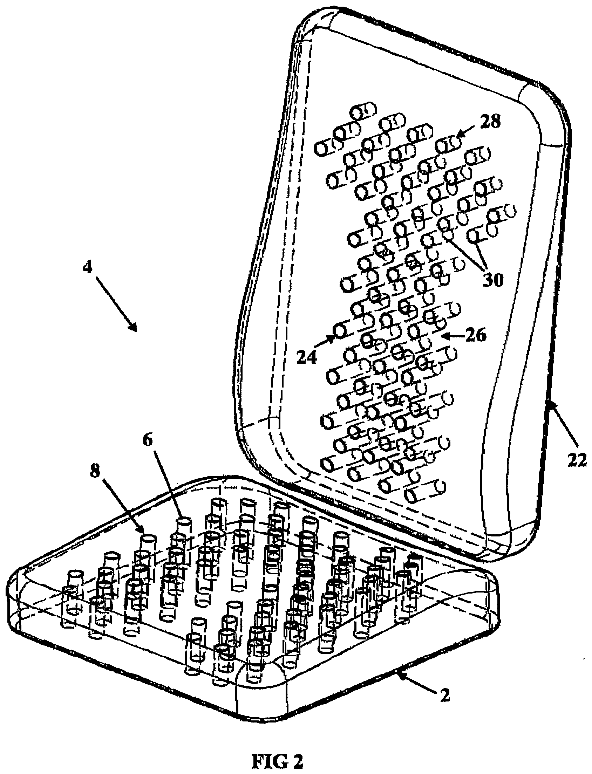

Referring to Figures 1 - 4, there is shown a seat portion 2 for a seat 4. The seat portion 2 is made of a single foam material having a plurality of apertures 6 defining a seating area 8. This seating area 8 is such that it comprises a first portion 10 for receiving a person's buttocks, a second portion 12 for receiving a rear thigh part of a first leg of the person, and a third portion 14 for receiving a rear thigh part of a second leg of the person.

The third portion 14 is spaced apart from the second portion 12. The seating area 8 is softer than the remainder of the seat portion 2. The apertures 6 give lower local compression spring rates. The seating area 8 feels soft and comfortable to sit on, and it is supported by the surrounding non-apertured parts of the seat portion 2.

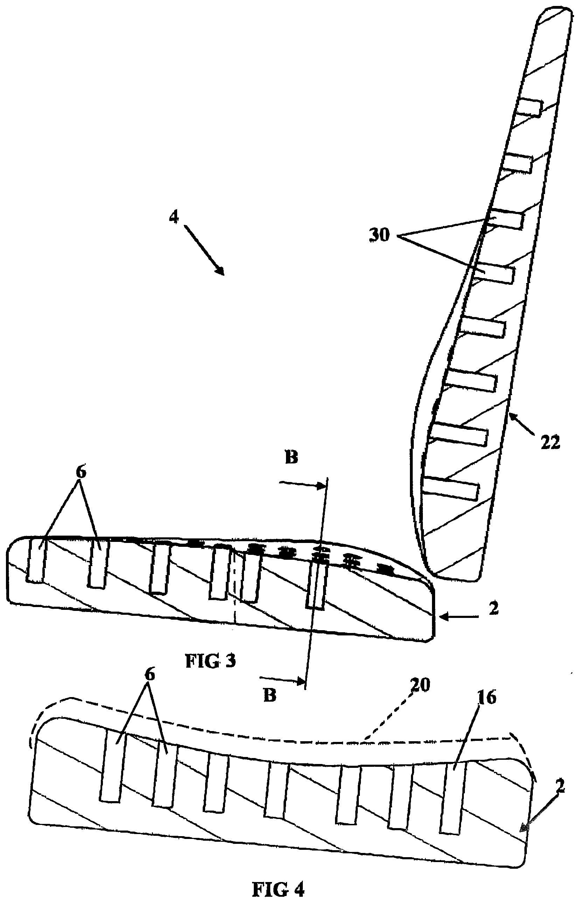

Each aperture 6 has an open end 16 which forms a part of an outer surface 18 of the seat portion 2. The outer surface 18 is the upper surface of the seat portion 2 which is sat on. In an alternative embodiment indicated by broken lines in Figure 4, the open end 16 of each of the apertures 6 could be hidden by a seat covering 20 which may be formed as an integral part of the seat portion 2 or which may be formed as a removable part of the seat portion 2.

The apertures 6 at the outer surface of the seat portion 2 that is sat on are all separated from each other by the foam material. The remainder of the seat portion 2 at the outer surface of the seat portion that is sat on does not have apertures.

As shown, the apertures 6 are in the form of cylindrical blind bores which extend perpendicular into the seating area 8 from an outer surface of the seat portion 2 that is sat on. The bores are of circular cross-section.

The seat 4 has a backrest portion 22. The backrest portion 22 is made from a single foam material having one or more apertures defining a backrest area 24.

The backrest area 24 is such that it comprises a first portion 26 for receiving a spine part of the person's back, and a second portion 28 for receiving a shoulder part of the person's back.

The backrest portion 22 has apertures 30. These apertures 30 are of the same type as the apertures 6.

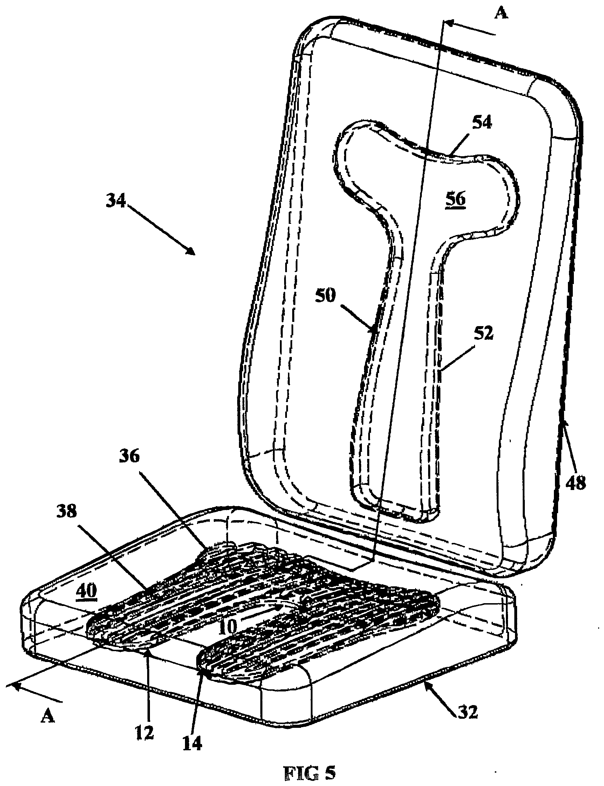

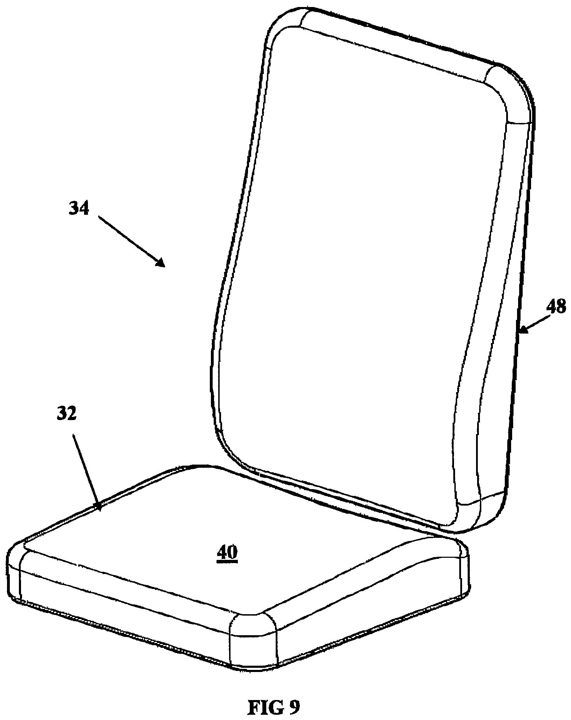

Referring now to Figures 5 - 9, which are not according to the present invention, there is shown a seat portion 32 for a seat 34. The seat portion 32 is made of a single foam material having a single aperture 36 defining a seating area 38. The seating area 38 is similar to the seating area 8 and therefore similar parts have been given the same reference numerals for ease of comparison and understanding. Thus the seating area 38 has a first portion 10, a second portion 12 and a third portion 14.

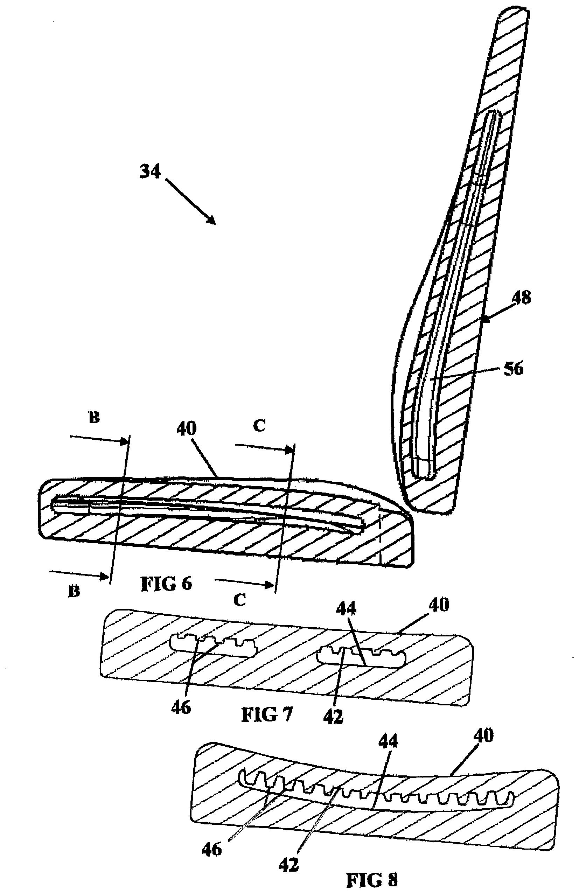

As shown most clearly in Figures 6, 7 and 8, which are not according to the present invention, the aperture 36 is formed inside the seat portion 32, whereby the seat portion 32 has an outer surface 40 which is sat on and which does not show the aperture 36.

The aperture 36 is defined by an upper surface 42 and a lower surface 44. The upper surface 42 has a plurality of abutments 46 for abutting against the lower surface 44 and thereby restricting the amount by which the upper surface 42 moves towards the lower surface 44 when the seat portion 32 is sat upon. The abutments 46 may act to prevent the seat portion 32 compressing too quickly if the seat portion 32 is sat upon by a very heavy person, or a person who sits down very quickly. As can be seen from Figures 7 and 8, the abutments are in the form of pillars.

The seat 34 has a backrest portion 48. The backrest portion 48 is made of a single foam material having a backrest area 50. The backrest area 50 is such that it comprises a first portion 52 for receiving a spine part of the person's back, and a second portion 54 for receiving a shoulder part of the person's back. The backrest area 50 is formed by a single aperture 56. The aperture 56 is of the same type of construction as the aperture 36 except that the aperture 56 does not have the abutments 46, although it may have the abutments 46 if desired. The aperture 56 is not visible, in the same manner that the aperture 36 is not visible.

The seat 4 shown in Figures 1 - 4 can be made by moulding using a cavity tool with pins for creating the apertures 6. The seat 34 can be produced by moulding, with the apertures 36, 56 being produced by having a moulded integral fold which forms a hinge. The seat 34 can then be produced all in one and then folded into place. The apertures 6, 30 may be especially useful on seats that offer heating or air-circulation systems. Thus the seat of the present invention may include heating means and/or air circulation means.

It is to be appreciated that the embodiment of the invention described above with reference to the accompanying drawings has been given by way of example only and that modification may be effected. Thus, for example, the seat portion 4 and the backrest portion 22 may be of designs other than those shown. Similarly, the apertures in the seat portion 4 and the backrest portion 22 may be different from those shown. The seat of the present invention may be especially useful as passenger seats for use in aircraft, trains and boats. The seat can also be used for industrial, office or domestic use.

## Claims

1. A seat portion (2) for a seat (4), which seat portion (2) is **characterised by** the combination of:
(i) the seat portion (2) is made of a single foam material having a plurality of apertures (6) defining a seating area (8);
(ii) the seating area (8) is such that it comprises a first portion (10) which has the apertures (6) and which is for receiving a person's buttocks, a second portion (12) which has the apertures (6) and which is for receiving a rear thigh part of a first leg of the person, and a third portion (14) which has the apertures (6) and which is for receiving a rear thigh part of a second leg of the person, the third portion (14) being spaced apart from the second portion (12);
(iii) the seating area (8) is softer than the remainder of the seat portion (2);
(iv) each aperture (6) has an open end which forms part of an outer surface (18) of the seat portion (2);
(v) the apertures (6) are cylindrical blind bores;
(vi) the apertures (6) in the second and third portions (12, 14) extend forward and sideways over the seating area (8); **characterized in that**
(vii) the remainder of the seat portion (2) that extends completely between the second and third portions (12, 14) does not contain any apertures (6).

2. A seat portion (2) according to claim 1 in which the bores (6) are of circular cross-section.

## Patentansprüche

1. Sitzteil (2) für einen Sitz (4), wobei der Sitzteil (2) durch die Kombination von Folgendem gekennzeichnet ist:
(i) der Sitzteil (2) ist aus einem einzigen Schaumstoffmaterial hergestellt, das eine Vielzahl von Öffnungen (6) hat und einen Sitzbereich (8) definiert,
(ii) der Sitzbereich (8) derart ist, dass er einen ersten Abschnitt (10), der Öffnungen (6) hat und der zur Aufnahme des Gesäßes einer Person bestimmt ist, einen zweiten Abschnitt (12), der die Öffnungen (6) hat und der zur Aufnahme eines hinteren Oberschenkelteils eines ersten Beins der Person bestimmt ist, und einen dritten Abschnitt (14) umfasst, der die Öffnungen (6) hat und der zur Aufnahme eines hinteren Oberschenkelteils eines zweiten Beins der Person bestimmt ist, wobei der dritte Abschnitt (14) von dem zweiten Abschnitt (12) beabstandet ist,
(iii) der Sitzbereich (8) ist weicher als der Rest des Sitzteils (2),
(iv) jede Öffnung (6) hat ein offenes Ende, das Teil einer Außenfläche (18) des Sitzteils (2) bildet,
(v) die Öffnungen (6) sind zylindrische Sackbohrungen,
(vi) die Öffnungen (6) in dem zweiten und dem dritten Abschnitt (12, 14) erstrecken sich über den Sitzbereich (8) nach vorne und zur Seite, **dadurch gekennzeichnet, dass**
(vii) der Rest des Sitzteils (2), der sich vollständig zwischen dem zweiten und dem dritten Abschnitt (12, 14) erstreckt, keine Öffnungen (6) enthält.

2. Sitzteil (2) nach Anspruch 1, wobei die Bohrungen (6) einen kreisförmigen Querschnitt haben.

## Revendications

1. Partie d'assise (2) pour un siège (4), ladite partie d'assise (2) étant **caractérisée par** la combinaison de particularités suivantes :
(i) la partie d'assise (2) est constituée d'un seul matériau alvéolaire comportant une pluralité d'ouvertures (6) définissant une région d'assise (8) ;
(ii) la région d'assise (8) est telle qu'elle comprend une première partie (10) qui comporte les ouvertures (6) et qui est destinée à recevoir les fesses d'une personne, une deuxième partie (12) qui comporte les ouvertures (6) et qui est destinée à recevoir une partie arrière de cuisse d'une première jambe de la personne, et une troisième partie (14) qui comporte les ouvertures (6) et qui est destinée à recevoir une partie arrière de cuisse d'une seconde jambe de la personne, la troisième partie (14) étant espacée de la deuxième partie (12) ;
(iii) la région d'assise (8) est plus molle que le reste de la partie d'assise (2) ;
(iv) chaque ouverture (6) comporte une extrémité ouverte qui fait partie d'une surface extérieure (18) de la partie d'assise (2) ;
(v) les ouvertures (6) sont des trous borgnes cylindriques ;
(vi) les ouvertures (6) dans les deuxième et troisième parties (12, 14) s'étendent vers l'avant et latéralement sur la région d'assise (8) ; **caractérisée en ce que**
(vii) le reste de la partie d'assise (2) qui s'étend complètement entre les deuxième et troisième parties (12, 14) ne contient pas d'ouvertures (6).

2. Partie d'assise (2) selon la revendication 1, dans laquelle les trous (6) présentent une section transversale circulaire.
